(19)

Europäisches
Patentamt
European
Patent Office
Office européen
des brevets

(11) **EP 4 325 245 A1**

(12) **EUROPEAN PATENT APPLICATION**

(43) Date of publication:
**21.02.2024 Bulletin 2024/08**

(21) Application number: **22190356.0**

(22) Date of filing: **15.08.2022**

(51) International Patent Classification (IPC):
**G01S 7/484** (2006.01)  **G01S 17/10** (2020.01)

(52) Cooperative Patent Classification (CPC):
**G01S 7/484; G01S 17/10**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MUnique Technology GmbH
81677 München (DE)**

(72) Inventor: **Eder, Bastian
80339 Munich (DE)**

(74) Representative: **Legl, Stefan
LLM IP Patentanwaltskanzlei
Hofmannstrasse 60
81379 München (DE)**

(54) **APPARATUS AND METHOD FOR DISTANCE MEASUREMENT**

(57) The present disclosure relates to an apparatus (100, 200) for distance measurement, comprising:
a pulsed beam source (110) configured to emit a first pulsed beam (PB1) having a first pulse repetition rate and a second pulsed beam (PB2) having a second pulse repetition rate different from the first pulse repetition rate; superposition means (120) configured to superimpose the first pulsed beam (PB1) and the second pulsed beam (PB2) into a superimposed beam (SB); a beam splitting unit (130) configured to split the superimposed beam (SB) into a reference beam (RB) and a measurement beam (MB);
a detector unit (140) configured to:
(i) receive the reference beam (RB) after it has traveled along a reference beam path and the measurement beam (MB) after it has traveled along a distance measurement path to an object (10), and
(ii) provide a reception signal indicative of a distance (d) to the object (10) based on the received reference beam (RB) and the received measurement beam (MB).

**Fig. 7**

**Description**

**FIELD**

The present disclosure relates to an apparatus for distance measurement, a method for distance measurement, a machine-readable medium, and a controller for an apparatus for distance measurement. More particularly, the present disclosure relates to instant ranging using a double laser oscillator ("IRUDLO").

**BACKGROUND**

Distance measuring devices are known that measure a distance to an object by directing a laser beam at the object. The distance to the object can be determined by analyzing the laser light reflected from the object. Many high-resolution distance measuring devices provide only relative distance measurements (changes in distance) or absolute distances with less accurate resolution. Laser Doppler vibrometers, for example, provide highly accurate relative distance measurements. LiDAR (Light Detection and Ranging) systems, on the other hand, can provide absolute distance measurements, but with poor resolution.

However, for applications such as distance measurements between satellites in Earth orbit, it may be advantageous to measure the absolute distance with high accuracy, for example, to determine the velocity of satellites and/or to perform time synchronization between moving satellites.

In view of the above, an apparatus for distance measurement, a method for distance measurement, a machine-readable medium, and a controller for an apparatus for distance measurement, that overcome at least some of the problems in the art are beneficial.

**SUMMARY**

It is an object of the present disclosure to provide an apparatus for distance measurement, a method for distance measurement, a machine-readable medium, and a controller for an apparatus for distance measurement that allow to measure absolute distances with high accuracy.

According to an independent aspect of the present disclosure, an apparatus for distance measurement is provided. The apparatus includes a pulsed beam source configured to emit a first pulsed beam having a first pulse repetition rate and a second pulsed beam having a second pulse repetition rate different from the first pulse repetition rate; superposition means configured to superimpose the first pulsed beam and the second pulsed beam into a superimposed beam; a beam splitting unit configured to split the superimposed beam into a reference beam and a measurement beam; a detector unit configured to receive the reference beam after it has traveled along a reference beam path and the measurement beam after it has traveled along a distance measurement path to an object, and provide a reception signal indicative of a distance to the object based on the received reference beam and the received measurement beam. The distance is an absolute distance.

The distance is defined between the apparatus and the object. For example, the distance may be defined between a reference point of the apparatus and a measurement point of the object. The measurement point of the object can be an area of the object which reflects the measurement beam back towards the apparatus.

According to some embodiments, which can be combined with other embodiments described herein, the apparatus includes, or is connected to, an analysis unit configured to determine the distance to the object based on the reception signal. In an exemplary embodiment, the analysis unit is integrated in the apparatus. In another exemplary embodiment, the analysis unit is a separate entity and is connected to the apparatus to receive the reception signal for further analysis.

Preferably, the analysis unit includes, or is, a FPGA, a microchip, a processor, a computer and the like.

According to some embodiments, which can be combined with other embodiments described herein, the analysis unit is further configured to determine a velocity of the object and/or the apparatus based on the determined distance to the object, in particular by observing a change of the absolute distance between the apparatus and the object.

Preferably, the velocity is a relative velocity of the object with respect to the apparatus or vice versa.

According to some embodiments, which can be combined with other embodiments described herein, the analysis unit is configured for time synchronization based on the determined distance to the object. For distance measurement, pulses are sent between the apparatus and the object, establishing an optical connection between the apparatus and the object. The optical connection can be used to send an additional optical trigger signal (e.g., another laser). The object receives the pulses as well as the trigger signal. The trigger signal can be used, for example, to communicate that the following pulse belongs to a specific time. Thus, time can be sent from the apparatus to the object. The time calculation and laser control may take place in the apparatus. This concept can be used for time synchronization between navigation satellites.

According to some embodiments, which can be combined with other embodiments described herein, the analysis unit is configured for vibration measurements based on the determined distance to the object. Such vibration measurements can be performed by observing time-resolved, relative length changes. For example, the measuring rate of the apparatus can be > 1MHz and a measuring accuracy can be in the $1\mu m$ range. Thus, smallest movements of the object can be detected very quickly. This concept can be used in vibration tests. For example, an object can be placed on a shaker, and it can be examined whether the object survives e.g. longer transport routes. Several measuring points can be attached to the vibration object and the vibration behavior (e.g., eigenmodes, resonances, deformation, etc.) of the object can be examined.

According to some embodiments, which can be combined with other embodiments described herein, the pulsed beam source includes a first pulsed beam source configured to emit the first pulsed beam having the first pulse repetition rate; and a second pulsed beam source configured to emit the second pulsed beam having the second pulse repetition rate.

The first pulsed beam source and the second pulsed beam source can be included in separate hardware modules or can be provided in the same hardware module.

Preferably, the first pulsed beam source and the second pulsed beam source are separate pulsed beam sources. "Separate" means that the first pulsed beam source and the second pulsed beam source physically operate separately from each other to emit the first pulsed beam and the second pulsed beam by separate physical processes. In other words, the first pulsed beam source and the second pulsed beam source are separate operating units. However, the first pulsed beam source and the second pulsed beam source may be contained within the same hardware module.

According to some embodiments, which can be combined with other embodiments described herein, the pulsed beam source includes optical oscillators configured to emit the first pulsed beam and the second pulsed beam. For example, the first pulsed beam source can include, or be, a first oscillator configured to emit the first pulsed beam. Additionally, or alternatively, the second pulsed beam source can include, or be, a second oscillator configured to emit the second pulsed beam.

According to some embodiments, which can be combined with other embodiments described herein, the pulsed beam source is a pulsed laser beam source. The first pulsed beam can be a first pulsed laser beam and the second pulsed beam can be a second pulsed laser beam.

Preferably, the pulsed beam source is an ultrashort pulse laser. For example, the first pulsed beam source can include, or be, a first ultrashort pulse laser oscillator configured to emit the first pulsed beam. Additionally, or alternatively, the second pulsed beam source can include, or be, a second ultrashort pulse laser oscillator configured to emit the second pulsed beam.

The term "ultrashort" as used throughout the present disclosure refers to pulse durations in the femtosecond (fs) and/or picosecond (ps) range.

According to some embodiments, which can be combined with other embodiments described herein, the first pulse repetition rate is 1MHz or larger, or 10MHz or larger, or 100MHz or larger, or 1GHz or larger. For example, the first pulse repetition rate can be in the range between 10 MHz and 1GHz.

According to some embodiments, which can be combined with other embodiments described herein, the second pulse repetition rate is 1MHz or larger, or 10MHz or larger, or 100MHz or larger, or 1GHz or larger. For example, the second pulse repetition rate can be in the range between 10 MHz and 1GHz.

According to some embodiments, which can be combined with other embodiments described herein, a difference between the first pulse repetition rate and the second pulse repetition rate is 1kHz or larger, 10kHz or larger, or 100kHz or larger.

Additionally, or alternatively, the difference between the first pulse repetition rate and the second pulse repetition rate is 15% or less, 10% or less, 5% or less, or 1% or less of the first pulse repetition rate or the second pulse repetition rate.

Preferably, the difference between the first pulse repetition rate and the second pulse repetition rate is 10% or less of the first pulse repetition rate or the second pulse repetition rate and 1kHz or larger.

According to some embodiments, which can be combined with other embodiments described herein, the superposition means includes at least one of a beam splitter and an optical combiner. However, the present disclosure is not limited thereto, and other optical means suitable for overlapping the first pulsed beam and the second pulsed beam may also be used.

According to some embodiments, which can be combined with other embodiments described herein, the beam splitting unit includes at least one of a beam splitter, an optical combiner, an optical circulator, a density filter, a reference unit configured for partial reflection and transmission, and combinations thereof. However, the present disclosure is not limited thereto, and other optical means suitable for splitting the superimposed beam into the reference beam and the measurement beam may also be used.

According to some embodiments, which can be combined with other embodiments described herein, the beam splitting unit includes a first optical unit configured for transmission of the superimposed beam; and a second optical unit configured for partial reflection and partial transmission of the superimposed beam having passed through the first optical unit.

Preferably, the first optical unit is further configured for reflection of a portion of the superimposed beam which has been reflected by the second optical unit, and the detector unit is configured to receive the portion of the superimposed beam which has been reflected by the first optical unit.

Preferably, the second optical unit is configured for transmission of the measurement beam after it has traveled along a distance measurement path to the object. In other words, the second optical unit can function as an entry point for the reflected measurement beam into the apparatus for analysis.

According to some embodiments, which can be combined with other embodiments described herein, the detector unit includes at least one optical detector (e.g., a photodiode) configured to (simultaneously) receive the reference beam and the measurement beam, wherein the detector unit is configured to provide a detection signal corresponding to (a superposition of) the reference beam and the measurement beam received at the at least one optical detector; and an interference unit configured to interfere the detection signal with itself to obtain the reception signal.

Preferably, the detector unit is configured to provide the detection signal in a time domain and/or a frequency domain. For example, the detector unit can include a frequency transformation unit configured to perform Fourier transformation to generate the detection signal in the frequency domain. The detection signal in the frequency domain can then be interfered with itself to generate the reception signal.

Preferably, the interference unit may include a mixer and/or saturated amplifier to interfere the detection signal with itself to obtain the reception signal.

According to some embodiments, which can be combined with other embodiments described herein, the pulsed beam source is configured to provide pulsed beams in a predetermined wavelength range, wherein the pulsed beams in the predetermined wavelength range are configured for distance measurements to different measurement points. The term "predetermined wavelength range" refers to a finite bandwidth of different wavelengths as opposed to single wavelengths.

In some embodiments, the object can contain an optical bandpass (e.g., by special coatings). Thus, a small part of an optical spectrum of the pulsed beams in the predetermined wavelength range is filtered out and reflected back to the apparatus. If several objects are equipped with different optical bandpasses, they can be measured simultaneously. A separate detector unit with the same optical bandpass can be set up for each object. The signal evaluation is identical for each detector unit.

According to some embodiments, which can be combined with other embodiments described herein, the apparatus further includes at least one first optical fiber connecting the pulsed beam source and the superposition means and at least one second optical fiber connecting the pulsed beam source and the superposition means, wherein the at least one first optical fiber is configured to guide the first pulsed beam from the pulsed beam source to the superposition means, and wherein the at least one second optical fiber is configured to guide the second pulsed beam from the pulsed beam source to the superposition means.

According to some embodiments, which can be combined with other embodiments described herein, the apparatus further includes at least one third optical fiber connecting the superposition means and the beam splitting unit, wherein the at least one third optical fiber is configured to guide the superimposed beam from the superposition means to the beam splitting unit.

According to some embodiments, which can be combined with other embodiments described herein, the apparatus further includes at least one fourth optical fiber connecting the first optical unit and the second optical unit of the beam splitting unit to guide optical signals therebetween.

According to some embodiments, which can be combined with other embodiments described herein, the apparatus further includes at least one fifth optical fiber connecting the beam splitting unit and the detector unit to guide the reference beam and the measurement beam to the detector unit.

According to some embodiments, which can be combined with other embodiments described herein, the pulsed beam source, the superposition means, the beam splitting unit and the detector unit are provided as a photonic integrated circuit.

According to a further independent aspect of the present disclosure, a method for distance measurement is provided. The method includes (simultaneously) generating a first pulsed beam having a first pulse repetition rate and a second pulsed beam having a second pulse repetition rate different from the first pulse repetition rate; superposing the first pulsed beam and the second pulsed beam into a superimposed beam; splitting the superimposed beam into a reference beam and a measurement beam; receiving, at a detector unit, the reference beam after it has traveled along a reference beam path and the measurement beam after it has traveled along a distance measurement path to an object; generating a reception signal based on the received reference beam and the received measurement beam; and determining a distance to the object based on the reception signal.

According to embodiments described herein, the method for distance measurement can be conducted by means of computer programs, software, computer software products and the interrelated controllers, which can have a CPU, a memory, a user interface, and input and output means being in communication with the corresponding components of the apparatus for distance measurement.

According to an independent aspect of the present disclosure, a machine-readable medium (e.g., a memory) is provided. The machine-readable medium includes instructions executable by one or more processors to implement the embodiments of the method for distance measurement of the present disclosure.

The (e.g., non-transitory) machine-readable medium may include, for example, optical media such as CD-ROMs and digital video disks (DVDs), and semiconductor memory devices such as Electrically Programmable Read-Only Memory (EPROM), and Electrically Erasable Programmable Read-Only Memory (EEPROM). The machine-readable medium may be used to tangibly retain computer program instructions or code organized into one or more modules and written in any desired computer programming language. When executed by, for example, one or more processors such computer program code may implement one or more of the methods described herein.

According to an independent aspect of the present disclosure, a controller is provided. The controller includes one or more processors and a memory coupled to the one or more processors and comprising instructions executable by the one or more processors to implement the embodiments of the method for distance measurement of the present disclosure.

Embodiments are also directed at apparatuses for carrying out the disclosed methods and include apparatus parts for performing each described method aspect. These method aspects may be performed by way of hardware components, a computer programmed by appropriate software, by any combination of the two or in any other manner. Furthermore, embodiments according to the disclosure are also directed at methods for operating the described apparatus. It includes method aspects for carrying out every function of the apparatus.

## BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:

FIG. 1     shows a schematic relationship between laser pulses on the detector (left) and a frequency measurement domain (right);

FIG. 2     shows a separation in different path lengths (left) and change of the measurement signal (right);

FIG. 3     shows comb signals of two oscillators with different repetition rates;

FIG. 4     shows that, after passing through the optical setup, different comb signals result;

FIG. 5     shows a superposition of the pulsed signals received at a detector;

FIG. 6     shows an interference of the detector's detection signal with itself to obtain the reception signal;

FIG. 7     shows an apparatus for distance measurement according to embodiments of the present disclosure;

FIG. 8     shows a detection unit of an apparatus for distance measurement according to embodiments of the present disclosure;

FIG. 9     shows different frequency ranges of detection and analysis according to embodiments of the present disclosure;

FIG. 10    shows an optical spectrum for measuring different measurement points according to embodiments of the present disclosure;

FIG. 11    shows an apparatus for distance measurement according to further embodiments of the present disclosure; and

FIG. 12    shows a flowchart of a method for distance measurement according to embodiments of the present disclosure.

## DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

Many high-resolution distance measuring devices provide only relative distance measurements (changes in distance) or absolute distances with less accurate resolution. Laser Doppler vibrometers, for example, provide highly accurate relative distance measurements. LiDAR (Light Detection and Ranging) systems, on the other hand, can provide absolute distance measurements, but with poor resolution.

The embodiments of the present disclosure overcome the above drawbacks by using two pulsed beams with different pulse repetition rates. In particular, the two pulsed beams are first superimposed. The superimposed beam is then split, and the two partial beams travel along a reference beam path and a distance measurement path. Both beams reach the same detector unit, which generates a reception (or measurement) signal corresponding to an interference signal of the two partial beams. From the interference signal, the absolute distance to the object can be determined with high precision.

In addition to the ability to measure absolute distances with high precision, the embodiments of the present disclosure provide the following advantages. First, the apparatus of the present disclosure places lower requirements on downstream electronics for signal processing because the resulting signals are in the kHz or MHz range. As a result, the apparatus can be built and operated at a lower cost. Second, high temporal resolution can be achieved due to high measurement rates, which are limited only by the Nyquist frequency. This makes the apparatus suitable for velocity measurements of very fast-moving objects, such as satellites. Third, in addition to absolute distance measurements, the apparatus can also be used for time synchronization and vibration measurements (i.e., time-resolved, relative length changes). Fourth, ultrashort pulse lasers can be used, with which a broad optical spectrum is available. This allows several measurement points to be examined in parallel. Here, each measurement point has the same measuring power. This is beneficial because the measurement points do not have to be scanned one after the other.

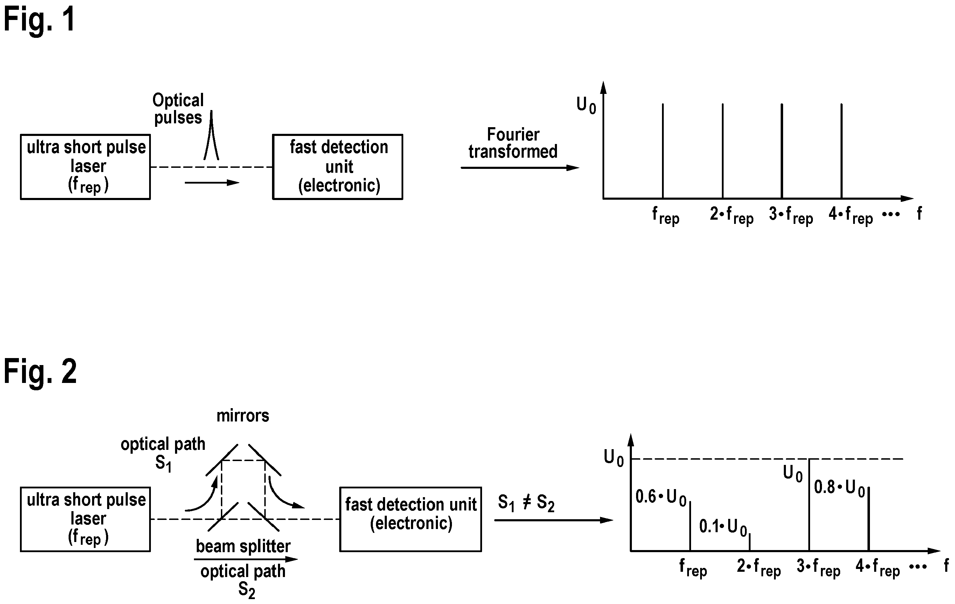

The principles of embodiments of the present disclosure are explained below with reference to FIGs. 1 to 6.

FIG. 1 shows a schematic relationship between laser pulses on the detector (left) and a frequency measurement domain (right).

The pulsed beam sources used in the embodiments of the present disclosure can be pulse lasers, such as ultrashort pulse lasers. The pulse lasers are optical oscillators which may emit pulses continuously. The pulse durations can be in the picosecond (e.g., 10-12ps) or femtosecond (e.g., 10-15fs) range and define the resolution of the distance measurement. The wavelength of the laser plays a secondary role. The repetition rate of the laser can be understood as a "ruler" (i.e., the length of the oscillator), wherein the pulse duration is the "sharp edge" of the ruler.

The pulses of the pulsed beam source can be measured using an optical detector unit, such as a photodiode and/or photomultiplier. The (electrical) output signal of the optical detector unit can be transformed into the frequency domain, for example, by Fourier transformation. The Fourier transformed signal has the shape of a "comb". Depending on the repetition rate of the pulsed beam source, the multiples of the repetition rate can be seen.

If the pulses travel along different paths s1, s2 having different path lengths and are measured by the same detection unit, the measurement signal changes in the frequency domain, as it is shown in FIG. 2.

The measurement signal at the optical detector unit (e.g., voltage U) is related to the path length difference of the two optical paths s1 and s2. This can be defined by a function g, which depends on the repetition rate and the path length difference:

$$U_{n \cdot f_{rep}} = g_{f_{rep}}\big(n \cdot (s_1 - s_2)\big) = g_{f_{rep}}(n \cdot \Delta s) \quad n \in \mathbb{N}$$

A first optical path (e.g., s2) can be defined as a reference path, and the second optical path (e.g., s1) can be defined as optical path to the object to be measured. Thus, distance measurements can be performed.

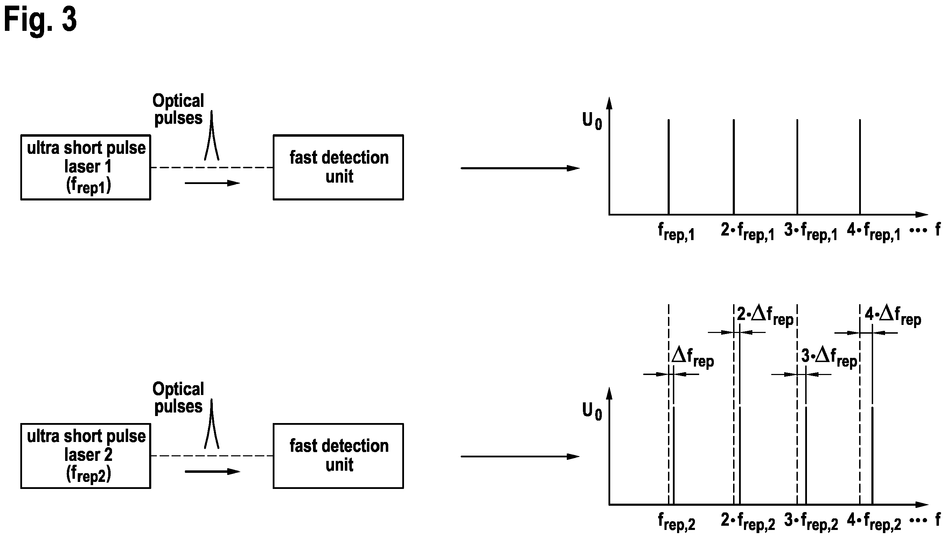

To measure an absolute distance to the object, the present disclosure uses a pulsed beam source having two oscillators, wherein a first oscillator of the two oscillators is configured to emit a first pulsed beam having a first pulse repetition rate and a second oscillator of the two oscillators is configured to emit a second pulsed beam having a second pulse repetition rate different from the first pulse repetition rate. FIG. 3 shows "comb" signals of the two oscillators with different repetition rates.

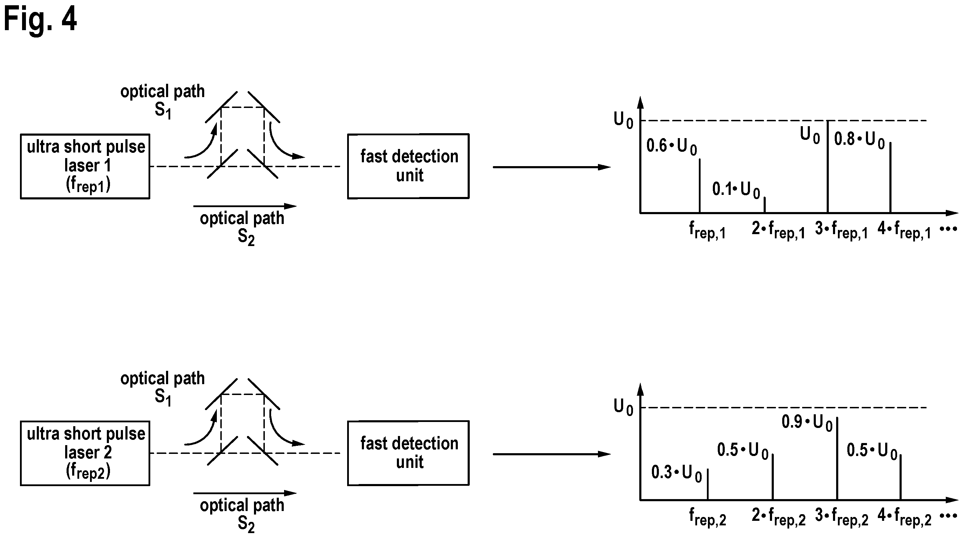

The comb signals of the two oscillators are at different frequencies ($f_{rep1}$, $f_{rep2}$). If the pulses of the two oscillators pass through the optical setup with two different path lengths, the comb signals of the two systems look different due to the different repetition rates, as it is shown in FIG. 4. As can be seen, the comb signals are different due to the different repetition rates.

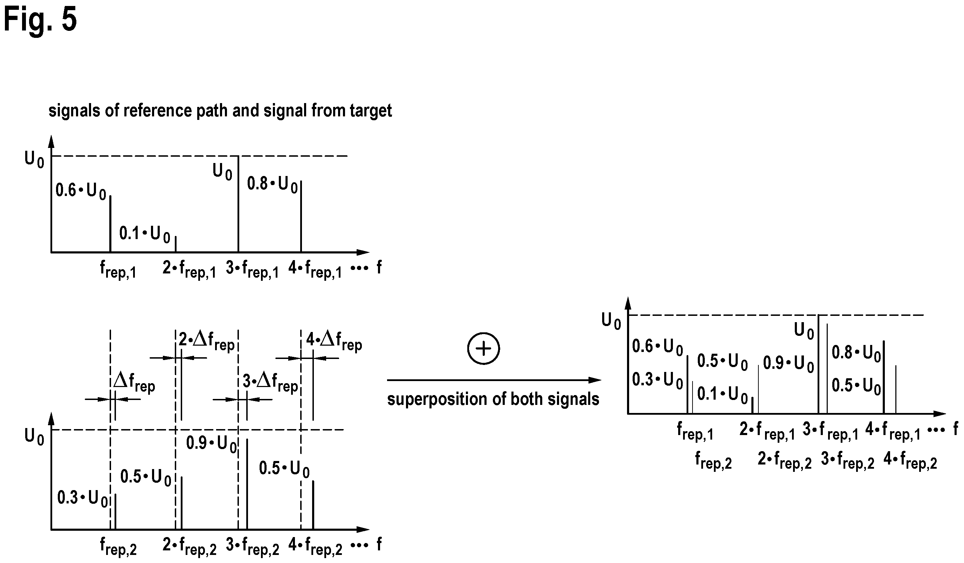

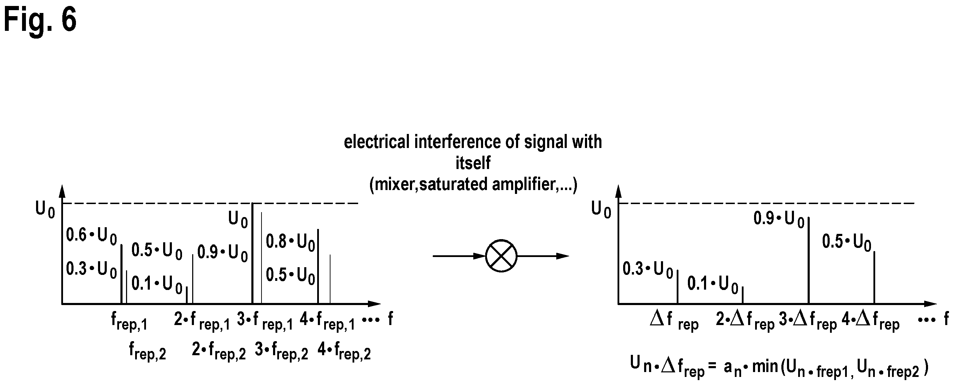

The detector unit receives a superposition of both pulses, i.e., the reference pulse and the measurement pulse reflected from the object, as it is shown in FIG. 5. This superposed detection signal can now be interfered with itself to obtain a single comb signal ("reception signal" or "interference signal") with a unique signature, as it is shown in FIG. 6. The distance to the object can be measured directly without a second measurement or without any further measuring principle.

Also, the detection signal is transformed into a lower frequency range. In particular, the frequency range of the interference signal is determined by the frequency difference of the repetition rates. This can be in the kHz or MHz range. The processing of electrical signals in this frequency range is much easier than for higher frequency ranges.

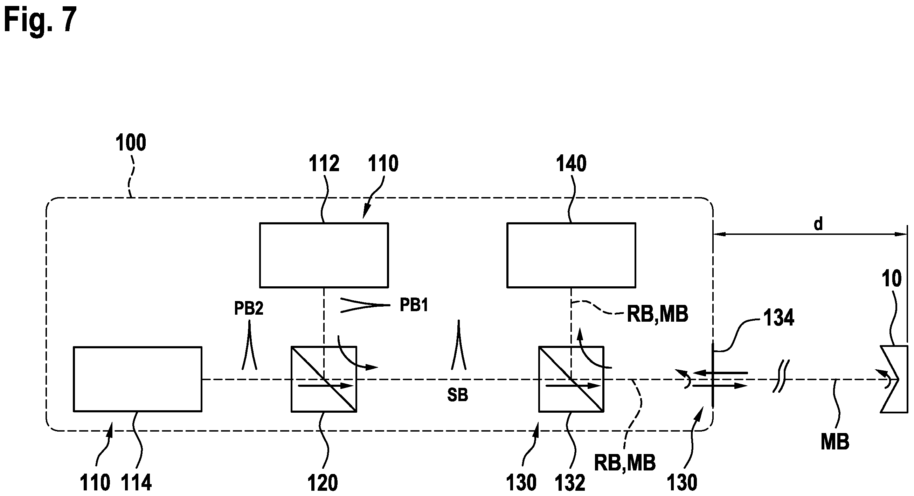

FIG. 7 shows an apparatus 100 for distance measurement according to embodiments of the present disclosure.

The apparatus 100 includes a pulsed beam source 110 configured to emit a first pulsed beam PB1 having a first pulse repetition rate and a second pulsed beam PB2 having a second pulse repetition rate different from the first pulse repetition rate.

The pulsed beam source 110 may include a first pulsed beam source 112 configured to emit the first pulsed beam PB1 having the first pulse repetition rate; and a second pulsed beam source 114 configured to emit the second pulsed beam PB2 having the second pulse repetition rate. For example, the first pulsed beam source 112 can include, or be, a first ultrashort pulse laser oscillator configured to emit the first pulsed beam PB1. Additionally, the second pulsed beam source 114 can include, or be, a second ultrashort pulse laser oscillator configured to emit the second pulsed beam PB2. Pulse durations of the first pulsed beam source 112 and the second pulsed beam source 114 can be in the femtosecond (fs) and/or picosecond (ps) range.

In some embodiments, the first pulse repetition rate of the first pulsed beam PB1 is 1MHz or larger, or 10MHz or larger, or 100MHz or larger, or 1GHz or larger. For example, the first pulse repetition rate can be in the range between 10 MHz and 1GHz. Additionally, the second pulse repetition rate of the second pulsed bean PB2 can be 1MHz or larger, or 10MHz or larger, or 100MHz or larger, or 1GHz or larger. For example, the second pulse repetition rate can be in the range between 10 MHz and 1GHz.

A difference between the first pulse repetition rate and the second pulse repetition rate can be 1kHz or larger, 10kHz or larger, or 100kHz or larger. Additionally, or alternatively, the difference between the first pulse repetition rate and the second pulse repetition rate can be 15% or less, 10% or less, 5% or less, or 1% or less of the first pulse repetition rate or the second pulse repetition rate. For example, the difference between the first pulse repetition rate and the second pulse repetition rate can eb 10% or less of the first pulse repetition rate or the second pulse repetition rate and 1kHz or larger.

The apparatus 100 further includes superposition means 120 configured to superimpose the first pulsed beam PB 1 and the second pulsed beam PB2 into a superimposed beam SB such that both pulses travel the same optical path(s).

In some embodiments, the superposition means 120 includes a beam splitter and/or an optical combiner. However, the present disclosure is not limited thereto, and other optical means suitable for overlapping the first pulsed beam and the second pulsed beam may also be used.

The apparatus 100 further includes a beam splitting unit 130 located downstream of the superposition means 120 along a travel path of the superimposed beam SB. The beam splitting unit 130 is configured to split the superimposed beam SB into a reference beam RB and a measurement beam MB. The reference beam RB travels along a reference beam path to a detector unit 140, and the measurement beam MB travels along a distance measurement path to the detector unit 140 while being reflected from the object 10 along the way. The reference beam path may be located entirely within the apparatus 100.

In some embodiments, the beam splitting unit 130 may include at least one of a beam splitter, an optical combiner, an optical circulator, a density filter, a reference unit configured for partial reflection and transmission, and combinations thereof. However, the present disclosure is not limited thereto, and other optical means suitable for splitting the superimposed beam SB into the reference beam RB and the measurement beam MB may also be used.

In an exemplary embodiment, the beam splitting unit 130 includes a first optical unit 132 and a second optical unit 134 located downstream of the first optical unit 132 along the travel direction of the superimposed beam SB.

The first optical unit 132 can be configured for transmission of the superimposed beam SB. The second optical unit 134 can be configured for partial reflection and partial transmission of the superimposed beam SB having passed through the first optical unit 132.

In some embodiments, the first optical unit 132 can include at least one of a beam splitter, an optical combiner and an optical circulator. Additionally, or alternatively, the second optical unit 134 can include at least one of a beam splitter and a density filter. For example, the second optical unit 134 can be a plate or reference plate configured for partial reflection and partial transmission of the superimposed beam SB.

The portion of the superimposed beam SB reflected by the second optical unit 134 can be reflected towards the first optical unit 132 and can correspond to the reference beam RB. Accordingly, the second optical unit 134 can define the reference beam path for the reference beam RB. The first optical unit 132 can be configured for reflection of the portion of the superimposed beam SB which has been reflected by the second optical unit 134, i.e., the reference beam RB, towards the detector unit 140. The detector unit 140 can be configured to receive the portion of the superimposed beam SB which has been reflected by the first optical unit 132, i.e., the reference beam RB.

The portion of the superimposed beam SB transmitted by the second optical unit 134 can correspond to the measurement beam MB and leave the apparatus 100 in a direction towards the object 10. The measurement beam MB is reflected by the object 10 (e.g., a retroreflector or reflecting surface of the object 10) and back to the apparatus 100. The reflected measurement beam MB enters the apparatus 100 via the second optical unit 134 (or another entry point of the apparatus 100) and is reflected by the first optical unit 132 towards the detector unit 140. The detector unit 140 can be configured to receive the measurement beam MB which has been reflected by the first optical unit 132.

The detector unit 140 is configured to receive the reference beam RB after it has traveled along the reference beam path and the measurement beam MB after it has traveled along the distance measurement path to the object 10. Both beams are received at the same time and result in a detection signal at the detector which is a superposition of both beams. The detector unit 140 provides or generates a reception signal based on the received reference beam RB and the received measurement beam MB. In particular, the detector unit 140 may interfere the detection signal with itself to generate the reception signal.

An analysis unit can be configured to determine the absolute distance d to the object 10 based on the reception signal. The analysis unit can be included in the detector unit 140 or can be provided as a separate entity.

The detector unit 140 can be configured to provide the detection signal in a time domain and/or a frequency domain. For example, the detector unit 140 can include a frequency transformation unit configured to perform Fourier transformation to generate the detection signal in the frequency domain. The detection signal can then be interfered with itself by an interference unit to generate the reception signal.

In some embodiments, the interference unit may include a mixer and/or saturated amplifier to interfere the detection signal with itself to obtain the reception signal.

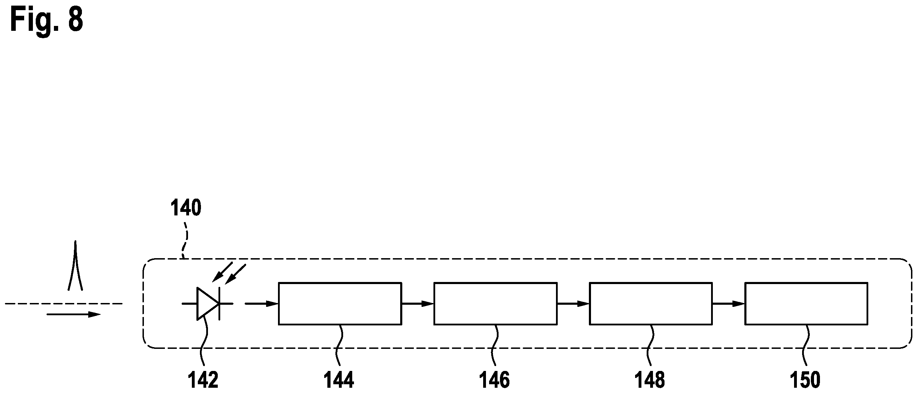

FIG. 8 shows a detection unit 140 of an apparatus for distance measurement according to embodiments of the present disclosure.

The detector unit 140 includes a HF photo diode 142, an HF amplifier 144, an (optional) filter unit 146, a mixer 148 and a signal detection unit 150 (analogue or digital; can correspond to the aforementioned analysis unit).

The first few components of the detector unit, namely the HF photo diode 142, the HF amplifier 144 and the mixer 148, must be suitable for high frequencies (e.g., 1GHz or more). Subsequent electronics such as the signal detection unit / analysis unit 150 are operable with frequencies up to, for example, 10MHz, as it is shown in FIG. 8.

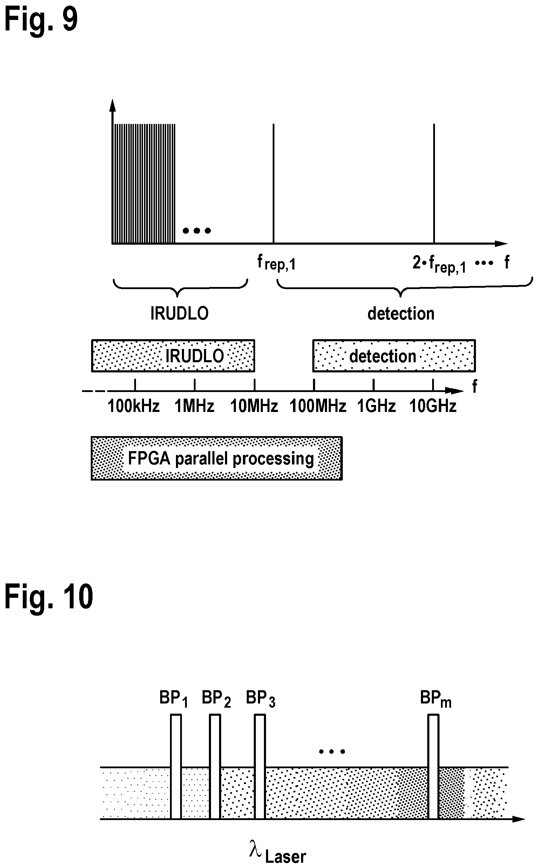

FIG. 10 shows an optical spectrum for measuring different measurement points according to embodiments of the present disclosure.

In some embodiments, the pulsed beam source of the apparatus for distance measurement can be configured to provide pulsed beams in a predetermined wavelength range, wherein the pulsed beams are configured for distance measurements to different measurement points.

For example, ultrashort pulse lasers can be configured in such a way that a broad optical spectrum (e.g., 50nm or more) is generated around the central wavelength. Since the embodiments of the present disclosure work wavelength-independent, optical band passes can be used to measure measurement points separately from each other, with the same power as a single point, and with the same setup. The quality of the band pass and the width of the available spectrum define the number of possible measurement points.

In some embodiments, the object can contain an optical bandpass (e.g., by special coatings). Thus, a small part of an optical spectrum of the pulsed beams is filtered out and reflected back to the apparatus. If several objects are equipped with different optical bandpasses, they can be measured simultaneously. A separate detector unit with the same optical bandpass can be set up for each object. The signal evaluation is identical for each detector unit.

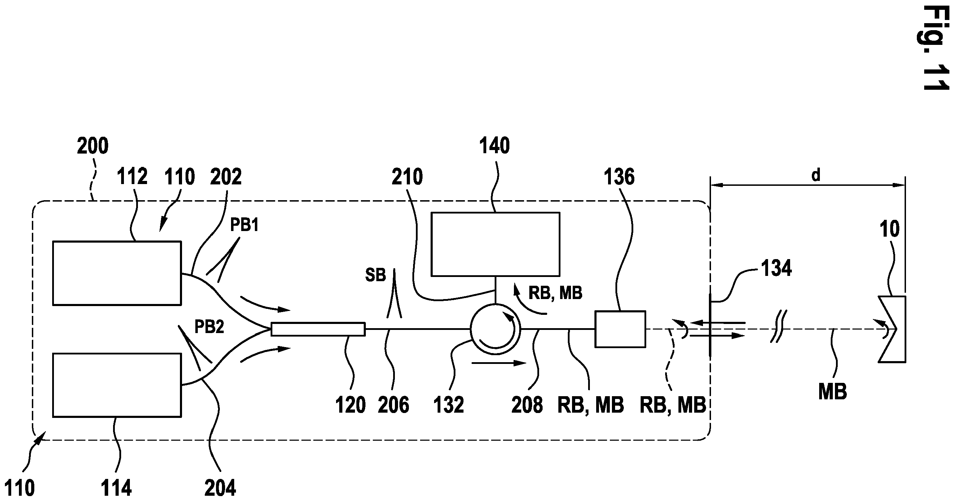

FIG. 11 shows an apparatus 200 for distance measurement according to embodiments of the present disclosure. The apparatus 200 is similar to the apparatus 100 described with respect to FIG. 7, and therefore a description of identical or similar aspects is omitted.

The apparatus 200 includes a pulsed beam source 110 configured to emit a first pulsed beam PB1 having a first pulse repetition rate and a second pulsed beam PB2 having a second pulse repetition rate different from the first pulse repetition rate.

The pulsed beam source 110 may include a first pulsed beam source 112 configured to emit the first pulsed beam PB1 having the first pulse repetition rate; and a second pulsed beam source 114 configured to emit the second pulsed beam PB2 having the second pulse repetition rate.

The apparatus 100 further includes superposition means 120 configured to superimpose the first pulsed beam PB1 and the second pulsed beam PB2 into a superimposed beam SB such that both pulses travel the same optical path(s).

The apparatus 100 further includes at least one first optical fiber 202 connecting the first pulsed beam source 112 and the superposition means 120 and at least one second optical fiber 204 connecting the second pulsed beam source 114 and the superposition means 120. The first pulsed beam PB1 travels from the first pulsed beam source 112 to the superposition means 120 via the at least one first optical fiber 202. The second pulsed beam PB2 travels from the second pulsed beam source 114 to the superposition means 120 via the at least one second optical fiber 204.

The apparatus 200 further includes a beam splitting unit 130 located downstream of the superposition means 120 along a travel path of the superimposed beam SB. The beam splitting unit 130 is configured to split the superimposed beam SB into a reference beam RB and a measurement beam MB. The reference beam RB travels along a reference beam path to a detector unit 140, and the measurement beam MB travels along a distance measurement path to the detector unit 140 while being reflected from the object 10 along the way.

The apparatus 100 further includes at least one third optical fiber 206 connecting the superposition means 120 and the beam splitting unit 130. The superimposed beam SB travels from the superposition means 120 to the beam splitting unit 130 via the at least one third optical fiber 206.

In an exemplary embodiment, the beam splitting unit 130 includes a first optical unit 132 and a second optical unit 134 located downstream of the first optical unit 132 along the travel direction of the superimposed beam SB. An auxiliary optical unit 136, such as a fiber coupled collimator, can provide an interface between the first optical unit 132 and the second optical unit 134. For example, at least one fourth optical fiber 208 can connect the first optical unit 132 and the auxiliary optical unit 136 to guide optical signals (i.e., the reference beam RB and the measurement beam MB) therebetween. In some embodiments, no optical fibers are provided between the auxiliary optical unit 136 and the second optical unit 134. In other words, the auxiliary optical unit 136 can provide an interface between a fiber-transmission side of the apparatus 200 and a free-transmission side of the apparatus 200.

The apparatus 200 further includes at least one fifth optical fiber 210 connecting the first optical unit 132 and the detector unit 140 to guide optical signals (i.e., the reference beam RB and the measurement beam MB) to the detector unit 140.

The first optical unit 132 can be configured for transmission of the superimposed beam SB. For example, the first optical unit 132 can be an optical circulator. The second optical unit 134 can be configured for partial reflection and partial transmission of the superimposed beam SB having passed through the first optical unit 132.

The portion of the superimposed beam SB reflected by the second optical unit 134 can be reflected towards the first optical unit 132 and can correspond to the reference beam RB. Accordingly, the second optical unit 134 can define the reference beam path for the reference beam RB. The first optical unit 132 can be configured for guiding the portion of the superimposed beam SB which has been reflected by the second optical unit 134, i.e., the reference beam RB, to the detector unit 140. The detector unit 140 can be configured to receive the portion of the superimposed beam SB from the first optical unit 132, i.e., the reference beam RB.

The portion of the superimposed beam SB transmitted by the second optical unit 134 can correspond to the measurement beam MB and leave the apparatus 100 in a direction towards the object 10. The measurement beam MB is reflected by the object 10 (e.g., a retroreflector or reflecting surface of the object 10) and back to the apparatus 100. The reflected measurement beam MB enters the apparatus 200 via the second optical unit 134 (or another entry point of the apparatus 100) and is guided by the first optical unit 132 to the detector unit 140. The detector unit 140 can be configured to receive the measurement beam MB from the first optical unit 132.

The detector unit 140 is configured to receive the reference beam RB after it has traveled along the reference beam path and the measurement beam MB after it has traveled along the distance measurement path to the object 10. The detector unit 140 provides or generates a reception signal based on the received reference beam RB and the received measurement beam MB

An analysis unit can be configured to determine the absolute distance d to the object 10 based on the reception signal. The analysis unit can be included in the detector unit 140 or can be provided as a separate entity.

FIGs. 7 and 11 show specific examples of the apparatus. However, the present disclosure is not limited thereto, and the apparatus can be configured in other suitable ways, such as in a photonic integrated circuit (PIC).

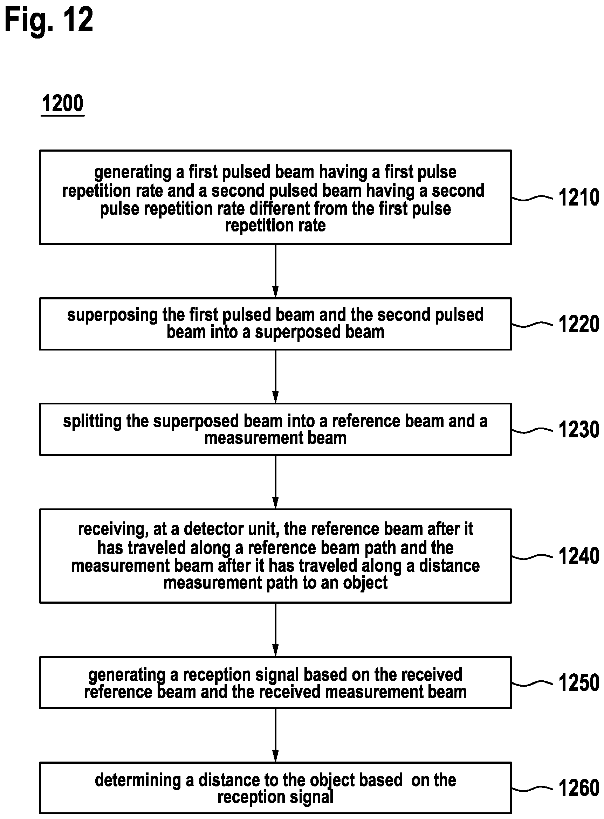

FIG. 12 shows a flowchart of a method 1200 for distance measurement according to embodiments of the present disclosure.

The method 1200 includes in block 1210 generating a first pulsed beam having a first pulse repetition rate and a second pulsed beam having a second pulse repetition rate different from the first pulse repetition rate; in block 1220 superposing the first pulsed beam and the second pulsed beam into a superimposed beam; in block 1230 splitting the superimposed beam into a reference beam and a measurement beam; in block 1240 receiving, at a detector unit, the reference beam after it has traveled along a reference beam path and the measurement beam after it has traveled along a distance measurement path to an object; in block 1250 generating a reception signal based on the received reference beam and the received measurement beam; and in block 1260 determining a distance to the object based on the reception signal.

While the foregoing is directed to embodiments of the disclosure, other and further embodiments of the disclosure may be devised without departing from the basic scope thereof, and the scope thereof is determined by the claims that follow.

**Claims**

1. Apparatus (100, 200) for distance measurement, comprising:

   a pulsed beam source (110) configured to emit a first pulsed beam (PB1) having a first pulse repetition rate and a second pulsed beam (PB2) having a second pulse repetition rate different from the first pulse repetition rate;
   superposition means (120) configured to superimpose the first pulsed beam (PB1) and the second pulsed beam (PB2) into a superimposed beam (SB);
   a beam splitting unit (130) configured to split the superimposed beam (SB) into a reference beam (RB) and a measurement beam (MB); and
   a detector unit (140) configured to:

   (i) receive the reference beam (RB) after it has traveled along a reference beam path and the measurement beam (MB) after it has traveled along a distance measurement path to an object (10), and
   (ii) provide a reception signal indicative of a distance (d) to the object (10) based on the received reference beam (RB) and the received measurement beam (MB).

2. The apparatus (100, 200) of claim 1, further including, or being connected to, an analysis unit configured to determine the distance (d) to the object (10) based on the reception signal, wherein:

   the analysis unit is further configured to determine a velocity of the object (10) and/or the apparatus (100, 200) based on the determined distance (d) to the object (10); and/or
   the analysis unit is configured for time synchronization based on the determined distance (d) to the object (10); and/or
   the analysis unit is configured for vibration measurements based on the determined distance (d) to the object (10).

3. The apparatus (100, 200) of claim 1 or 2, wherein the pulsed beam source (110) includes:

   a first pulsed beam source (112) configured to emit the first pulsed beam (PB1) having the first pulse repetition rate; and
   a second pulsed beam source (114) configured to emit the second pulsed beam (PB2) having the second pulse repetition rate,
   in particular wherein the first pulsed beam source (112) and the second pulsed beam source (114) are separate pulsed beam sources.

4. The apparatus (100, 200) of any one of claims 1 to 3, wherein the pulsed beam source (110) is a pulsed laser beam source, and wherein the first pulsed beam (PB1) is a first pulsed laser beam and the second pulsed beam (PB2) is a second pulsed laser beam.

5. The apparatus (100, 200) of any one of claims 1 to 4, wherein:

   the first pulse repetition rate is 1MHz or larger, or 10MHz or larger, or 100MHz or larger, or 1GHz or larger; and/or
   the second pulse repetition rate is 1MHz or larger, or 10MHz or larger, or 100MHz or larger, or 1GHz or larger; and/or
   a difference between the first pulse repetition rate and the second pulse repetition rate is 1kHz or larger, 10kHz or larger, or 100kHz or larger; and/or
   a difference between the first pulse repetition rate and the second pulse repetition rate is 15% or less, 10% or less, 5% or less, or 1% or less of the first pulse repetition rate or the second pulse repetition rate.

6. The apparatus (100, 200) of any one of claims 1 to 5, wherein the superposition means (120) includes at least one of a beam splitter and an optical combiner.

7. The apparatus (100, 200) of any one of claims 1 to 6, wherein the beam splitting unit (130) includes at least one of a beam splitter, an optical combiner, an optical circulator, a density filter, a reference unit configured for partial reflection and transmission, and combinations thereof.

8. The apparatus (100, 200) of any one of claims 1 to 7, wherein the beam splitting unit (130) includes:

a first optical unit (132) configured for transmission of the superimposed beam (SB); and
a second optical unit (134) configured for partial reflection and partial transmission of the superimposed beam (SB) having passed through the first optical unit (132),
wherein the first optical unit (132) is further configured for reflection of a portion of the superimposed beam (SB) which has been reflected by the second optical unit (134), and
wherein the detector unit (140) is configured to receive the portion of the superimposed beam (SB) which has been reflected by the first optical unit (132),
in particular wherein the second optical unit (134) is configured for transmission of the measurement beam (MB) after it has traveled along the distance measurement path to the object (10).

9. The apparatus (100, 200) of any one of claims 1 to 8, wherein the detector unit (140) includes:

at least one optical detector configured to receive the reference beam (RB) and the measurement beam (MB), wherein the detector unit (140) is configured to provide a detection signal corresponding to the reference beam (RB) and the measurement beam (MB) received at the at least one optical detector; and
an interference unit configured to interfere the detection signal with itself to obtain the reception signal, wherein the detector unit (140) is configured to provide the detection signal in a time domain and/or a frequency domain.

10. The apparatus (100, 200) of any one of claims 1 to 9, wherein the pulsed beam source (110) is configured to provide pulsed beams in a predetermined wavelength range, wherein the pulsed beams in the predetermined wavelength range are configured for distance measurements to different measurement points.

11. The apparatus (100, 200) of any one of claims 1 to 10, further including:

at least one first optical fiber (202) connecting the pulsed beam source (110) and the superposition means (120) and at least one second optical fiber (204) connecting the pulsed beam source (110) and the superposition means (120), wherein the at least one first optical fiber (202) is configured to guide the first pulsed beam (PB1) from the pulsed beam source (110) to the superposition means (120), and wherein the at least one second optical fiber (204) is configured to guide the second pulsed beam (PB2) from the pulsed beam source (110) to the superposition means (120), and/or
at least one third optical fiber (206) connecting the superposition means (120) and the beam splitting unit (130), wherein the at least one third optical fiber (206) is configured to guide the superimposed beam (SB) from the superposition means (120) to the beam splitting unit (130); and/or
at least one fourth optical fiber (208) connecting the first optical unit (132) and the second optical unit (134) of the beam splitting unit (130) to guide optical signals therebetween; and/or
at least one fifth optical fiber (210) connecting the beam splitting unit (130) and the detector unit (140) to guide the reference beam (RB) and the measurement beam (MB) to the detector unit (140).

12. The apparatus (100, 200) of any one of claims 1 to 11, wherein the pulsed beam source (110), the superposition means (120), the beam splitting unit (130) and the detector unit (140) are provided as a photonic integrated circuit.

13. Method (1200) for distance measurement, comprising:

generating (1210) a first pulsed beam having a first pulse repetition rate and a second pulsed beam having a second pulse repetition rate different from the first pulse repetition rate;
superposing (1220) the first pulsed beam and the second pulsed beam into a superimposed beam;
splitting (1230) the superimposed beam into a reference beam and a measurement beam;
receiving (1240), at a detector unit, the reference beam after it has traveled along a reference beam path and the measurement beam after it has traveled along a distance measurement path to an object;
generating (1250) a reception signal based on the received reference beam and the received measurement beam; and
determining (1260) a distance to the object based on the reception signal.

14. A machine-readable medium comprising instructions executable by one or more processors to implement the method (1200) of claim 13.

15. A controller for an apparatus for distance measurement, comprising:

one or more processors; and
a memory coupled to the one or more processors and comprising instructions executable by the one or more processors to implement the method (1200) of claim 13.

## Fig. 1

Optical pulses

| ultra short pulse laser ($f_{rep}$) | → | fast detection unit (electronic) |

Fourier transformed →

$U_0$

$f_{rep}$   $2 \cdot f_{rep}$   $3 \cdot f_{rep}$   $4 \cdot f_{rep}$   $\cdots$   $f$

## Fig. 2

mirrors

optical path $S_1$

| ultra short pulse laser ($f_{rep}$) | | fast detection unit (electronic) |

beam splitter

optical path $S_2$

$S_1 \neq S_2$ →

$U_0$

$U_0$

$0.6 \cdot U_0$   $0.8 \cdot U_0$

$0.1 \cdot U_0$

$f_{rep}$   $2 \cdot f_{rep}$   $3 \cdot f_{rep}$   $4 \cdot f_{rep}$   $\cdots$   $f$

EP 4 325 245 A1

# Fig. 3

EP 4 325 245 A1

# Fig. 4

optical path
$S_1$

ultra short pulse
laser 1
$(f_{rep1})$

optical path
$S_2$

fast detection
unit

$U_0$

$0.6 \cdot U_0$

$U_0$

$0.8 \cdot U_0$

$0.1 \cdot U_0$

$f_{rep,1}$  $2 \cdot f_{rep,1}$  $3 \cdot f_{rep,1}$  $4 \cdot f_{rep,1}$  •••

optical path
$S_1$

ultra short pulse
laser 2
$(f_{rep2})$

optical path
$S_2$

fast detection
unit

$U_0$

$0.9 \cdot U_0$

$0.5 \cdot U_0$

$0.5 \cdot U_0$

$0.3 \cdot U_0$

$f_{rep,2}$  $2 \cdot f_{rep,2}$  $3 \cdot f_{rep,2}$  $4 \cdot f_{rep,2}$  •••

# Fig. 5

signals of reference path and signal from target

EP 4 325 245 A1

# Fig. 6

electrical interference of signal with
itself
(mixer, saturated amplifier,...)

$$U_n \cdot \Delta f_{rep} = a_n \cdot \min(U_{n \cdot frep1}, U_{n \cdot frep2})$$

# Fig. 7

EP 4 325 245 A1

**Fig. 8**

# Fig. 9

# Fig. 10

## Fig. 11

# Fig. 12

1200

generating a first pulsed beam having a first pulse repetition rate and a second pulsed beam having a second pulse repetition rate different from the first pulse repetition rate ⟶ 1210

superposing the first pulsed beam and the second pulsed beam into a superposed beam ⟶ 1220

splitting the superposed beam into a reference beam and a measurement beam ⟶ 1230

receiving, at a detector unit, the reference beam after it has traveled along a reference beam path and the measurement beam after it has traveled along a distance measurement path to an object ⟶ 1240

generating a reception signal based on the received reference beam and the received measurement beam ⟶ 1250

determining a distance to the object based on the reception signal ⟶ 1260

Europäisches
Patentamt

European
Patent Office

Office européen
des brevets

# EUROPEAN SEARCH REPORT

Application Number

EP 22 19 0356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 047 521 A (UNIV TIANJIN) 15 February 2022 (2022-02-15) | 1-10, 12-15 | INV. G01S7/484 G01S17/10 |
| Y | * abstract; figures 1-5 * * paragraph [0004] – paragraph [0041] * * paragraph [0050] – paragraph [0052] * ----- | 11 | |
| Y | CN 114 019 525 A (CHONGQING INSTITUTE OF EAST CHINA NORMAL UNIV ET AL.) 8 February 2022 (2022-02-08) | 11 | |
| A | * abstract; figures 1-2 * * paragraph [0053] – paragraph [0054] * * paragraph [0008] – paragraph [0048] * ----- | 1-10, 12-15 | |
| A | JP 2015 072137 A (OPTICAL COMB INC) 16 April 2015 (2015-04-16) * abstract; figure 7 * * paragraph [0003] – paragraph [0009] * * paragraph [0034] * ----- | 1-15 | |

TECHNICAL FIELDS
SEARCHED      (IPC)

G01S

The present search report has been drawn up for all claims

| Place of search | Date of completion of the search | Examiner |
|---|---|---|
| Munich | 20 January 2023 | López de Valle, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 19 0356

20-01-2023

| Patent document cited in search report | | Publication date | Patent family member(s) | Publication date |
|---|---|---|---|---|
| CN 114047521 | A | 15-02-2022 | NONE | |
| CN 114019525 | A | 08-02-2022 | NONE | |
| JP 2015072137 | A | 16-04-2015 | NONE | |

EPO FORM P0459

For more details about this annex : see Official Journal of the European Patent Office, No. 12/82